(19)

Europäisches
Patentamt
European
Patent Office
Office européen
des brevets

(11) **EP 2 557 418 A1**

(12) **EUROPEAN PATENT APPLICATION**

(43) Date of publication:
**13.02.2013 Bulletin 2013/07**

(51) Int Cl.:
**G01N 27/407** (2006.01)  **G01N 27/416** (2006.01)
**G01N 33/00** (2006.01)

(21) Application number: **12179728.6**

(22) Date of filing: **08.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.08.2011  JP 2011173073**

(71) Applicant: **NGK Sparkplug Co., Ltd.**
**Nagoya**
**Aichi 467-8525 (JP)**

(72) Inventors:
• **Tsuduki, Masao**
  **Nagoya, Aichi 4678525 (JP)**
• **Tajima, Tomohiro**
  **Nagoya, Aichi 4678525 (JP)**
• **Ito, Ginjirou**
  **Nagoya, Aichi 4678525 (JP)**

(74) Representative: **Diehl & Partner GbR**
**Patentanwälte**
**Augustenstrasse 46**
**80333 München (DE)**

(54) **Gas sensor apparatus and concentration measurement method**

(57)    A gas sensor apparatus includes a gas sensor which outputs an output value corresponding to the concentration of a specific gas component contained in a gas; a pressure sensor which measures the pressure of the gas; and a computation section which computes a value representing the concentration of the specific gas component on the basis of the output value from the gas sensor and the pressure of the gas measured by the pressure sensor. The computation section computes a concentration value using an expression which is derived from Fick's law and is a function of the output value and the pressure value, computes a correction value on the basis of a correction term which is a function of the provisional specific-component concentration and the pressure value, and corrects the provisional specific-component concentration using the correction value in order to compute the concentration value of the specific gas component.

FIG. 2

EP 2 557 418 A1

**Description**

**BACKGROUND OF THE INVENTION**

**Field of the Invention**

The present invention relates to a gas sensor apparatus which includes a gas sensor for measuring the concentration of a gas to be detected, and to a concentration measurement method performed using the gas sensor. In particular, the subject apparatus and method of the invention are suitable for use in the case where a value output from the gas sensor must be corrected on the basis of pressure.

**Description of the Related Art**

For internal combustion engines such as a diesel engine and a gasoline engine, a common practice is to control a mixture ratio (i.e., a ratio of a gas to fuel which are supplied to the combustion chamber) in order to reduce fuel consumption and purify exhaust gas. In order to control the mixture ratio, a gas sensor is used to measure the proportion of a specific gas component (e.g., oxygen) contained in the intake gas or the proportion of the specific gas component contained in the exhaust gas.

The gas sensor includes a sensor element disposed in a gas (i.e., a target for measurement). The sensor element outputs a value representing the concentration of a specific gas component (e.g., oxygen concentration), which is the ratio of the specific gas component. However, the value output from the sensor element is known to be affected not only by the concentration of the specific gas component of the gas but also by the pressure of the gas.

In recent years, as precision control of an internal combustion engine has increased, there has been an increasing need for measuring the concentration of a specific gas component more accurately. In order to measure the concentration of a specific gas component of a gas (i.e., a target for measurement) more accurately, various methods have been proposed for eliminating the influence of gas pressure upon the value output from the gas sensor (see, for example, JP6-273381 and JP2005-061420).

Patent Documents JP6-273381 and JP2005-061420 disclose a configuration including a sensor element which measures the concentration of a specific gas component of a gas (i.e., a target for measurement) and a pressure sensor which measures the pressure of the gas. In addition, Patent Documents JP6-273381 and JP2005-061420 propose a method (correction method) for eliminating the influence of the gas pressure on the value which is output from the gas sensor and represents the concentration of the specific gas component. In this method, the value output from the gas sensor is multiplied by a coefficient based on the pressure measured by the pressure sensor, whereby the influence of the gas pressure on the output value is negated.

By using the correction method of the above-described Patent Documents JP6-273381 and JP2005-061420, the accuracy of a value representing the concentration of a specific gas component can be improved as compared with the case where the value output from the gas sensor and representing the concentration of the specific gas component is not corrected. However, the need for yet more precise control of an internal combustion engine will continue to increase. As a result, there is an increasing need to obtain a value representing the concentration of the specific gas component more accurately. That is, the correction method of the above-described Patent Documents JP6-273381 and JP2005-061420 has a problem in that the method encounters difficulty in obtaining a value which represents the concentration of the specific gas component with the required accuracy.

**SUMMARY OF THE INVENTION**

The present invention has been made to solve the above-described problems, and an object thereof is to provide a gas sensor apparatus and a concentration measurement method using a gas sensor, which apparatus and method can improve the accuracy of a value which is obtained from an output value of the gas sensor and which represents the concentration of a specific gas component contained in a gas.

The above object of the present invention has been achieved by providing, in a first aspect, a gas sensor apparatus (1) which comprises a gas sensor which outputs an output value corresponding to the concentration of a specific gas component contained in a gas flowing through a flow passage provided in an internal combustion engine; a pressure sensor which measures the pressure of the gas; and a computation section which computes a concentration value of the specific gas component on the basis of the output value output from the gas sensor and a pressure value of the gas measured by the pressure sensor. The computation section computes a provisional specific-component concentration using an expression which is derived from Fick's law and is a function of the output value output from the gas sensor and the pressure value measured by the pressure sensor, computes a correction value on the basis of a correction term which is a function of the provisional specific-component concentration and the pressure value measured by the pressure sensor, and corrects the provisional specific-component concentration using the correction value in order to compute the concentration value of the specific gas component.

According to the gas sensor apparatus (1) of the present invention, since the value representing the concentration of the specific gas component (provisional specific-component concentration) is computed using an expression which is derived from Fick's law and is a function of the output value from the gas sensor and the pressure value measured by the pressure sensor, the accuracy of the value representing the concentration of the specific gas component can be improved as compared with the case where the value output from the gas sensor and representing the concentration of the specific gas component is not corrected.

In addition, according to the gas sensor apparatus of the present invention, even if the provisional specific-component concentration computed on the basis of Fick's law contains an error, the error of the corrected concentration value of the specific gas component can be decreased by correcting the provisional specific-component concentration using a correction value based on a correction term which is a function of the provisional specific-component concentration and the pressure value measured by the pressure sensor.

The present inventors empirically found that the provisional specific-component concentration computed using the expression derived from Fick's law still depends on the concentration of a specific gas component and the gas pressure. That is, the present inventors found that, when the concentration of a specific gas component is measured for two gases each having the same concentration but differing in gas pressure, a difference (error) arises between the provisional specific-component concentrations computed for each of these gases. In view of the above, a gas-pressure-attributable variation is removed from the provisional specific-component concentration by correcting the provisional specific-component concentration using a correction value calculated from a correction term which is a function of the provisional specific-component concentration and the pressure. Thus, the concentration value which represents the concentration of the specific gas component and which has a reduced error can be obtained. Notably, a preferred method of correcting the provisional specific-component concentration using the correction value is adding the correction value to the provisional specific-component concentration or subtracting the correction value from the provisional specific-component concentration.

Notably, the gas sensor apparatus of the present invention may be used to measure the concentration of a specific gas component contained in the intake gas or the exhaust gas flowing through the flow passage provided in the internal combustion engine; however, preferably, the gas sensor apparatus of the present invention is used to measure the concentration of a specific gas component contained in the intake gas. Since the pressure of the intake gas changes greatly, the output value from the gas sensor and the concentration value of the specific gas component are more likely to contain errors. By using the gas sensor apparatus of the present invention, even when the concentration of a specific gas component contained in the intake gas is measured, a gas-pressure-attributable variation can be removed from the output value of the gas sensor, and the concentration value which represents the concentration of the specific gas component and which has a reduced error can be obtained.

In a preferred embodiment (2) of the above gas sensor apparatus (1) of the invention, the computation section computes the provisional specific-component concentration using the following expression:

$$\text{Provisional specific-component concentration} = 1 - e^{\left( -A \cdot I_P \cdot \frac{B+P}{P} \right)}$$

where Ip represents the output value output from the gas sensor, P represents the pressure value measured by the pressure sensor, and A and B are constants which allow approximation between two provisional specific-component concentrations which are computed from two pressure values and two output values corresponding to the two pressure values.

As mentioned above, since the provisional specific-component concentration is computed using the expression given above, the accuracy of the value representing the concentration of the specific gas component can be improved as compared with the case where the value output from the gas sensor and representing the concentration of the specific gas component is not corrected. Moreover, although the provisional specific-component concentration computed using the expression given above contains an error, the error of the corrected concentration value of the specific gas component can be decreased by correcting the provisional specific-component concentration using a correction value based on the correction term which is a function of the provisional specific-component concentration and the pressure value measured by the pressure sensor.

In another preferred embodiment (3) of the above gas sensor apparatus (1) or (2) of the invention, the correction term is a polynomial expression associated with the pressure measured by the pressure sensor.

Thus, the error of the concentration value of the specific gas component computed by the computation section can be decreased by using, as the correction term, a polynomial expression associated with the measured pressure. For example, even when the dependence of the provisional specific-component concentration on the gas pressure changes continuously with the change in gas pressure, an increase in the error of the concentration value of the specific gas component can be restrained by using, as the correction term, a polynomial expression selected for said change.

In yet another preferred embodiment (4) of the above gas sensor apparatus (3) of the invention, different coefficients are contained in individual terms of the polynomial expression, and preferably, each of these coefficients is a function of the provisional specific-component concentration.

Thus, since each of the coefficients of the individual terms of the correction term is a function of the provisional specific-component concentration, the error of the concentration value of the specific gas component and computed by the computation section can be decreased further. For example, in the case where the dependence of the provisional specific-component concentration on the gas pressure changes greatly with the gas pressure and the provisional specific-component concentration cannot be corrected satisfactorily through use of the correction term which is a fixed polynomial expression, decreasing the error of the concentration value of the specific gas component is difficult. Even in such a case, by changing the coefficients of the individual terms of the polynomial expression in accordance with the provisional specific-component concentration, the range in which the provisional specific-component concentration can be corrected by the correction term can be broadened and the increase in error of the concentration value of the specific gas component can be restrained more reliably.

According to another embodiment of the above gas sensor apparatus (3) of the invention, different coefficients are contained in individual terms of the polynomial expression, wherein each of these coefficients are fixed.

In a second aspect (5), the present invention provides a concentration measurement method using a gas sensor disposed in a flow passage provided in an internal combustion engine which outputs an output value corresponding to the concentration of a specific gas component contained in a gas flowing through the flow passage, and a pressure sensor disposed in the flow passage which measures the pressure of the gas. The method computes a concentration value of the specific gas component on the basis of the output value output from the gas sensor and the pressure value of the gas measured by the pressure sensor. The method comprises the steps of computing a provisional specific-component concentration using an expression which is derived from Fick's law and which is a function of the output value from the gas sensor and the pressure value measured by the pressure sensor, computing a correction value on the basis of the provisional specific-component concentration and the pressure value measured by the pressure sensor, and correcting the provisional specific-component concentration using the correction value in order to compute the concentration value of the specific gas component.

According to the concentration measurement method of the present invention, since the value representing the concentration of the specific gas component (provisional specific-component concentration) is computed using the expression which is derived from Fick's law and is a function of the output value from the gas sensor and the pressure value measured by the pressure sensor, the accuracy of the value representing the concentration of the specific gas component can be improved as compared with the case where the value output from the gas sensor and representing the concentration of the specific gas component is not corrected.

Moreover, according to the concentration measurement method of the present invention, even if the provisional specific-component concentration computed on the basis of Fick's law contains an error, the error of the corrected concentration value of the specific gas component can be decreased by correcting the provisional specific-component concentration using a correction value based on the correction term which is a function of the provisional specific-component concentration and the pressure value measured by the pressure sensor.

In a preferred embodiment (6) of the above concentration measurement method (5) of the invention, the provisional specific-component concentration is computed using the following expression:

$$\text{Provisional specific-component concentration} = 1 - e^{\left(-A \cdot I_P \cdot \frac{B+P}{P}\right)}$$

where Ip represents the output value output from the gas sensor, P represents the pressure value measured by the pressure sensor, and A and B are constants which allow approximation between two provisional specific-component concentrations which are computed from two pressure values and two output values corresponding to the two pressure values.

As mentioned above, since the provisional specific-component concentration is computed using the expression given above, the accuracy of the value representing the concentration of the specific gas component can be improved as compared with the case where the value output from the gas sensor and representing the concentration of the specific gas component is not corrected. Moreover, although the provisional specific-component concentration computed using the expression given above contains an error, the error of the corrected concentration value of the specific gas component can be decreased by correcting the provisional specific-component concentration using a correction value based on the correction term which is a function of the provisional specific-component concentration and the pressure value measured by the pressure sensor.

In a preferred embodiment (7) of the above concentration measurement method (5) or (6) of the invention, the correction term is a polynomial expression associated with the pressure measured by the pressure sensor.

Thus, the error of the concentration value of the specific gas component computed by the computation section can be decreased by using, as the correction term, a polynomial expression associated with the measured pressure. For example, even when the dependence of the provisional specific-component concentration on the gas pressure changes continuously with the change in the gas pressure, an increase in the error of the concentration value of the specific gas component can be restrained by using, as the correction term, a polynomial expression selected for said change.

In yet another preferred embodiment (8) of the above concentration measurement method (7) of the invention, different coefficients are contained in individual terms of the polynomial expression, and preferably, each of these coefficients is a function of the provisional specific-component concentration.

Thus, since each of the coefficients of the individual terms of the correction term is a function of the provisional specific-component concentration, the error of the concentration value of the specific gas component and computed by the computation section can be decreased further. For example, in the case where the dependence of the provisional specific-component concentration on the gas pressure changes greatly with the gas pressure and the provisional specific-component concentration cannot be corrected satisfactorily through use of the correction term which is a fixed polynomial expression, decreasing the error of the value representing the concentration of the specific gas component is difficult. Even in such a case, by changing the coefficients of the individual terms of the polynomial expression in accordance with the provisional specific-component concentration, the range in which the provisional specific-component concentration can be corrected by the correction term can be broadened and the increase in the error of the concentration value of the specific gas component can be restrained more reliably.

In yet another embodiment of the above concentration measurement method (7) of the invention, different coefficients are contained in individual terms of the polynomial expression, wherein each of these coefficients are fixed.

The gas sensor apparatus according to the present invention and the concentration measurement method performed using the gas sensor according to the present invention can improve the accuracy of the value obtained from the output value of the gas sensor and which represents the concentration of a specific gas component contained in a gas.

## BRIEF DESCRIPTION OF THE DRAWINGS

FIG. 1 is a schematic diagram showing the configuration of a gas sensor apparatus according to one embodiment of the present invention.

FIG. 2 is a flowchart representing an oxygen concentration computation method performed by the ECU shown in FIG. 1.

FIGS. 3A-3C are graphs showing the coefficients a, b and c of a calculation formula for computing the coefficient C of a correction term.

FIGS. 4A and 4B are graphs showing the coefficients d and e of another calculation formula for computing the coefficient C of the correction term.

FIG. 5 is a graph showing the measurement error of the oxygen concentration measured by the gas sensor apparatus.

## Description of Reference Numerals

Reference numerals used to identify various structural features in the drawings include the following.

1: gas sensor apparatus
10: oxygen sensor (gas sensor)
20: pressure sensor
30: engine control unit (computation section)
40: internal combustion engine

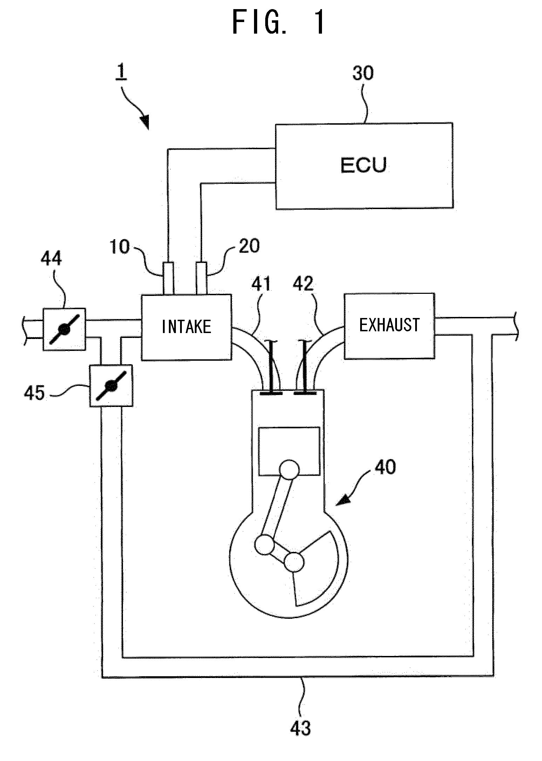

A gas sensor apparatus 1 according to one embodiment of the present invention will now be described with reference to FIGS. 1 to 5. However, the present invention should not be construed as being limited thereto.

FIG. 1 is a schematic diagram showing the configuration of the gas sensor apparatus 1 according to the present embodiment.

As shown in FIG. 1, the gas sensor apparatus 1 measures the concentration of oxygen contained in the intake gas which is taken into an internal combustion engine 40. The oxygen concentration measured by the gas sensor apparatus 1 is used to control the internal combustion engine 40; for example, it is used to control an air-fuel ratio. The gas sensor apparatus 1 is mainly composed of an oxygen sensor (gas sensor) 10, a pressure sensor 20, and an engine control unit (computation section) 30 (hereinafter referred to as an "ECU 30").

Notably, in the present embodiment, the gas sensor apparatus 1 of the present invention is used to measure the concentration of oxygen contained in the intake gas which is taken into the internal combustion engine 40. However, the gas sensor apparatus 1 of the present invention may be used to measure the concentration of oxygen contained in the exhaust gas which is discharged from the internal combustion engine 40, and no particular limitation is imposed on the gas for which oxygen concentration is measured. However, use of the gas sensor apparatus of the present invention is effective for measuring the concentration of oxygen contained in the intake gas. This is because the pressure of the intake gas changes greatly, and the $O_2$ concentration and the output value of a sensor element, which will be described below, are more likely to involve errors.

The oxygen sensor 10 and the pressure sensor 20 are disposed in an intake pipe 41 of the internal combustion engine 40. Specifically, the oxygen sensor 10 and the pressure sensor 20 are disposed on the internal combustion engine 40 side in relation to a junction point where the intake pipe 41 and an exhaust gas recirculation pipe 43 (hereinafter referred to as an "EGR pipe 43") are connected together; namely, these sensors are disposed downstream of the junction point. Meanwhile, an intake valve 44 for controlling the flow rate of air flowing through the intake pipe 41 is disposed in the intake passage 41 at a position upstream of the positions at which the oxygen sensor 10 and the pressure sensor 20 are disposed therein. Notably, no particular limitation is imposed on the relative positions of the oxygen sensor 10 and the pressure sensor 20; that is, the oxygen sensor 10 may be disposed upstream of the pressure sensor 20, or the pressure sensor 20 may be disposed upstream of the oxygen sensor 10.

Notably, the EGR pipe 43 connects an exhaust pipe 42 and the intake pipe 41 so as to lead a portion of the exhaust gas flowing through the exhaust pipe 42 to the intake pipe 41; namely, the EGR pipe 43 is provided to recirculate the exhaust gas. The EGR pipe 43 has a control valve 45 for controlling the recirculation amount of the exhaust gas.

The oxygen sensor 10 measures the concentration of oxygen contained in the intake gas flowing through the intake pipe 41, and outputs a current Ip which is an output value representing the oxygen concentration. The value of the current Ip changes with the concentration of oxygen contained in the intake gas as well as the pressure of the intake gas flowing through the intake pipe 41. In other words, the current Ip is a function of the oxygen concentration, and is also a function of the pressure of the intake gas. Notably, no particular limitation is imposed on the type, etc., of the oxygen sensor 10, so long as it is a commonly-known sensor having the above-described characteristic.

The pressure sensor 20 measures the pressure of the intake gas flowing through the intake pipe 41 so as to output a measurement signal corresponding to the pressure of the intake gas. Notably, a commonly-known pressure sensor may be used as the pressure sensor 20; that is, no particular limitation is imposed on the type, etc. of the pressure sensor 20.

The ECU 30 obtains, through computation, the oxygen concentration of the intake gas flowing through the intake pipe 41 on the basis of the output value from the oxygen sensor 10 and the pressure value measured by the pressure sensor 20. The ECU 30 controls the operation state of the internal combustion engine 40 based on at least the oxygen concentration thus obtained. An oxygen concentration computation method performed by the ECU 30 will be described below.

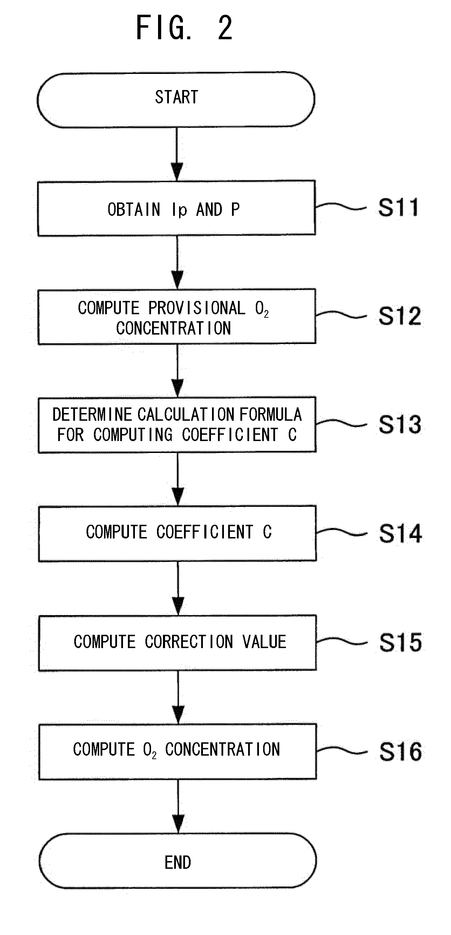

Next, an oxygen concentration computation method performed in the gas sensor apparatus 1 configured as mentioned above will be described. FIG. 2 is a flowchart representing the oxygen concentration computation method performed by the ECU 30 shown in FIG. 1.

First, the ECU 30 executes a step (S11) of receiving the output value (current Ip) from the oxygen sensor 10 and a pressure-related electric signal which is a measurement signal output from the pressure sensor 20. The pressure-related electric signal is converted to the pressure value P of the intake gas flowing through the intake pipe 41 with reference to a table, etc., which is pre-stored in the ECU 30.

Next, the ECU 30 executes a step (S12) of computing a provisional $O_2$ concentration (corresponding to a "provisional specific-component concentration" of the invention) through use of Expression (1) given below. The provisional $O_2$ concentration is a value which represents the oxygen concentration and which can be obtained by substituting the value of the current Ip and the pressure value P of the intake gas into Expression (1) derived from Fick's law.

$$\text{Provisional O}_2 \text{ concentration} = 1 - e^{\left(-A \cdot I_P \cdot \frac{B+P}{P}\right)} \qquad \ldots (1)$$

In Expression (1), Ip is the output value from the oxygen sensor 10, and P is the pressure value measured by the pressure sensor 20. Notably, A and B are constants determined such that two provisional specific-component concentrations computed for two pressure values approximate each other. Specifically, A is a constant determined by Expression (2) given below, and B is a constant determined by Expression (3) given below.

$$A = \frac{LR}{4SFkT^{0.75}} \qquad \ldots (2)$$

$$B = \frac{k}{k'} T^{1.25} \qquad \ldots (3)$$

In Expressions (2) and (3), L is the length (m) of a diffusion hole of the oxygen sensor 10; R is the gas constant ($8.314 \ JK^{-1}mol^{-1}$); S is the cross-sectional area ($m^2$) of the diffusion hole of the oxygen sensor 10; F is the Faraday constant ($9.6485 \times 10^4 \ Cmol^{-1}$); and T is the temperature (K) of the gas passing through the diffusion hole of the oxygen sensor 10.

Notably, no particular limitation is imposed on the method of obtaining the above-described coefficients A and B. That is, the above-described coefficients A and B may be respectively calculated from the above-described Expressions (2) and (3), or they may be empirically obtained by measuring the oxygen concentration of a gas whose $O_2$ concentration and pressure are known.

The above-described Expression (1) is obtained as follows. Expression (5) is derived from Expression (4) (i.e., Fick's law) given below. Expression (6) representing a diffusion coefficient $D_{AB}$, which is obtained by combining a molecular diffusion coefficient $D_m$ (= $kT^{1.75}/P$) and a Knudsen diffusion coefficient $D_k$ (= $k'T^{0.5}$), is substituted into Expression (5), from which Expression (7) is obtained through rearrangement. Expression (1) is obtained from Expression (7).

$$\dot{c}_A - w_A \dot{c} = -cD_{AB} \frac{\partial w_A}{\partial y} \qquad \ldots (4)$$

$$I = -\frac{4SFD_{AB}P}{LRT} \ln\left(1 - \frac{P_A}{P}\right) \qquad \ldots (5)$$

In Expressions (4) and (5), $c_A$ over which a dot (·) is placed is the molar mass velocity (= $c_A v_A$) of a component A; $w_A$ is the mole fraction (= $c_A/c$) of the component A; c over which a dot (·) is placed is the molar mass velocity (= cv); and c is the molar concentration ($kmol/m^3$). Meanwhile, $P_A$ is the partial pressure ($kP_a$) of the component A; P is the pressure (kPa) of the gas; and $P_A/P$ is the concentration (%) of the component A.

$$\frac{1}{D_{AB}} = \frac{1}{D_m} + \frac{1}{D_k}$$

$$D_{AB} = \frac{kk'T^{2.25}}{kT^{1.75} + k'T^{0.5}P} \qquad \ldots (6)$$

$$I = -\frac{4SFP}{LRT}\frac{kk'T^{2.25}}{kT^{1.75}+k'T^{0.5}P}\ln\left(1-\frac{P_A}{P}\right)$$

$$\ln\left(1-\frac{P_A}{P}\right) = A \cdot I \cdot \frac{B+P}{P}$$

$$\frac{P_A}{P} = 1 - e^{\left(-A \cdot I \cdot \frac{B+P}{P}\right)} \qquad\qquad ...\,(7)$$

After computing the provisional $O_2$ concentration, the ECU 30 executes a step (S13) of determining a calculation formula for computing a coefficient C. The coefficient C is contained in the correction term of Expression (8) (given below) which is used to obtain the $O_2$ concentration (corresponding to the "concentration value" of the invention) from the provisional $O_2$ concentration (see Expression (9)).

$$O_2 \text{ concentration} = \text{Provisional } O_2 \text{ concentration}$$

$$- \text{Correction term} \qquad ...\,(8)$$

$$\text{Correction term} =$$

$$\text{Provisional } O_2 \text{ concentration} \cdot (C/100) \qquad ...\,(9)$$

The coefficient C is computed using a calculation formula which is selected in accordance with the intake gas pressure measured by the pressure sensor 20. In the present embodiment, Expression (10) given below is selected as a calculation formula when the measured intake gas pressure is lower than a predetermined pressure value $P_T$, and Expression (11) given below is selected as a calculation formula when the measured intake gas pressure is equal to or higher than the predetermined pressure value $P_T$.

$$C = ax^2 + bx + c \qquad ...\,(10)$$

$$C = dx + e \qquad ...\,(11)$$

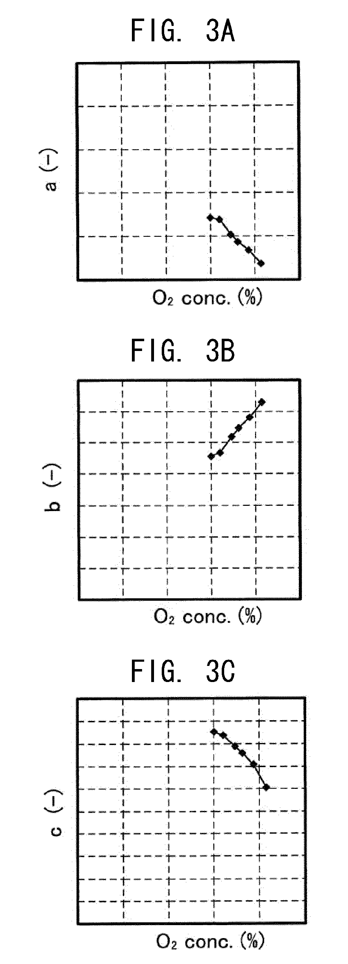

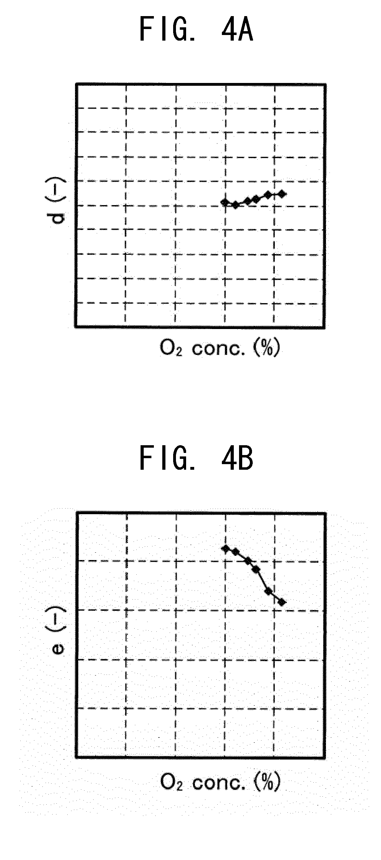

In Expressions (10) and (11), x is the intake gas pressure measured by the pressure sensor 20.
a is a coefficient determined on the basis of the value of the provisional $O_2$ concentration. Specifically, as shown in FIG. 3A, a is a coefficient that decreases as the value of the provisional $O_2$ concentration increases. b is a coefficient determined on the basis of the value of the provisional $O_2$ concentration. Specifically, as shown in FIG. 3B, b is a coefficient that increases with the value of the provisional $O_2$ concentration. c is a coefficient determined on the basis of the provisional $O_2$ concentration. Specifically, as shown in FIG. 3C, c is a coefficient that decreases as the value of the provisional $O_2$ concentration increases.
d is a coefficient determined on the basis of the value of the provisional $O_2$ concentration. Specifically, as shown in FIG. 4A, d is a coefficient that changes with the value of the provisional $O_2$ concentration. e is a coefficient determined on the basis of the value of the provisional $O_2$ concentration. Specifically, as shown in FIG. 4B, e is a coefficient that decreases as the value of the provisional $O_2$ concentration increases.
After selecting the calculation formula for computing the coefficient C, the ECU 30 executes a step (S14) of computing the coefficient C.

For example, when the intake gas pressure measured by the pressure sensor 20 is lower than the pressure value $P_T$, the ECU 30 selects the above-described expression (10) as a calculation formula, and computes the value of the coefficient C on the basis of the values of the coefficients a, b, and c which correspond to the computed provisional $O_2$ concentration and the intake gas pressure measured by the pressure sensor 20.

After computing the value of the coefficient C, the ECU 30 executes a step (S15) of computing a correction value which is a value of the correction term. Specifically, the ECU 30 computes the value of the correction term on the basis of the above-described Expression (9), the computed provisional $O_2$ concentration, and the value of the coefficient C computed in S14.

Subsequently, the ECU 30 executes a step (S16) of computing an $O_2$ concentration (concentration value) on the basis of the above-described Expression (8), the computed provisional $O_2$ concentration, and the value of the correction term computed in Step S15. Thus, computation of the oxygen concentration by the gas sensor apparatus 1 is completed.

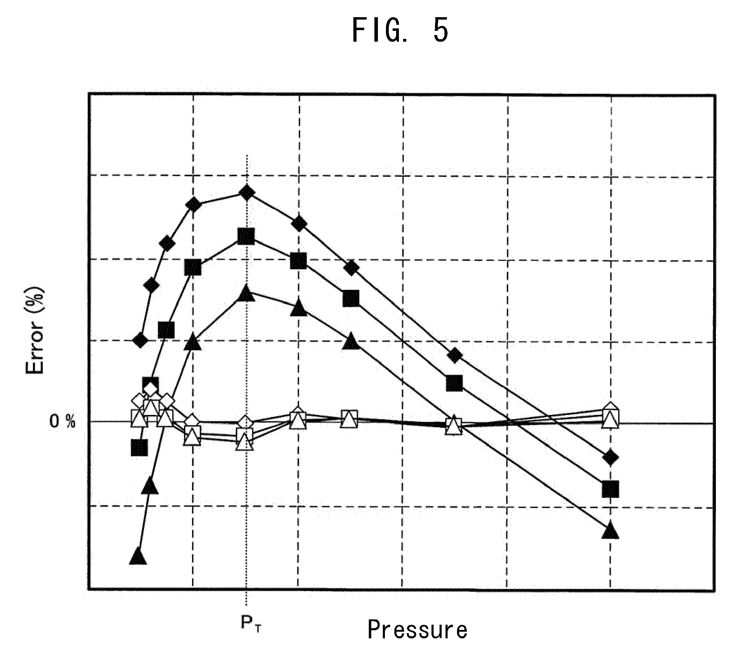

Next, the measurement error (measurement accuracy) of the oxygen concentration measured by the gas sensor apparatus 1 of the present embodiment will now be described, with reference to FIG. 5, as contrasted with the measurement error of the oxygen concentration (corresponding to the provisional 02 concentration of the present embodiment) measured by a conventional measurement method.

In FIG. 5, the vertical axis represents the degree of the oxygen concentration measurement error, and the horizontal axis represents the pressure of the intake gas which is the target for measurement. Measurement results obtained when the concentration of oxygen contained in the intake gas (target for measurement) was 15% are represented by respective curves connecting rhombuses (♦ and ◇); the measurement results obtained when the concentration of oxygen contained in the intake gas (target for measurement) was 18% are represented by respective curves connecting squares (■ and □); and measurement results obtained when the concentration of oxygen contained in the intake gas (target for measurement) was 21 % are represented by respective curves connecting triangles (▲ and △. In addition, errors in the results of measurements performed by the gas sensor apparatus 1 of the present embodiment are represented by curves connecting white rhombuses (◇), white squares (□), and white triangles (△), respectively; and errors in the results of measurements performed by the conventional method are represented by curves connecting black (filled) rhombuses (♦), black squares (■), and black triangles (▲), respectively.

First, the influence of the pressure of the intake gas (target for measurement) on the degree of measurement error will be described.

In the case where the oxygen concentration is measured by the conventional measurement method, the degree of measurement error changes greatly with the change in gas pressure at all oxygen concentrations (in the case of ♦, ■, and ▲). Specifically, in a pressure range where the gas pressure is lower than the predetermined pressure value PT, the degree of measurement error increases with the gas pressure, and in a range where the gas pressure is equal to or higher than the pressure value PT, the degree of measurement error decreases as the gas pressure increases.

Notably, the predetermined pressure value PT described herein is the same as that used in the above-described step S13. In other words, the calculation formula used for computing the coefficient C is selected according to how the provisional $O_2$ concentration changes with the intake gas pressure.

In contrast, in the case where the oxygen concentration is measured by the gas sensor apparatus 1 of the present embodiment, the degree of error changes in a relatively narrow range at all oxygen concentrations (in the case of ◇, □, and △) regardless of the change in intake gas pressure. In other words, the gas sensor apparatus 1 of the present embodiment can measure the oxygen concentration with an error in a narrow error range, without being influenced by the change in intake gas pressure.

Next, the influence of the oxygen concentration of the intake gas (target for measurement) on the measurement error will be described.

When the conventional measurement method is used, the degree of measurement error changes greatly with the change in oxygen concentration. Specifically, the degree of measurement error decreases as the oxygen concentration increases (♦ → ■ → A). In contrast, when the gas sensor apparatus 1 of the present embodiment is used, the degree of measurement error changes with the change in oxygen concentration but the change in the degree of measurement error is obviously small.

As seen from the above, the measurement error of the oxygen concentration measured by the gas sensor apparatus 1 of the present embodiment is less likely to be affected by the pressure and oxygen concentration of the intake gas (target for measurement), as compared with the measurement error of the oxygen concentration measured by the conventional measurement method.

According to the above-described configuration, even if the provisional $O_2$ concentration computed using Expression (1) derived from Fick's law contains an error, the provisional $O_2$ concentration can be corrected using the correction value based on the correction term which is a function of the provisional $O_2$ concentration and the pressure value P measured by the pressure sensor 20. Thus, a variation attributable to the pressure of the intake gas can be eliminated from the provisional $O_2$ concentration, whereby the error of the corrected $O_2$ concentration can be reduced. That is, the accuracy of the value representing the oxygen concentration measured by the oxygen sensor 10 can be improved.

The provisional specific-component concentration is computed through use of Expression (1) given below.

$$\text{Provisional } O_2 \text{ concentration } = 1 - e^{\left( -A \cdot I_P \cdot \frac{B+P}{P} \right)}$$

Therefore, the accuracy of the value representing the oxygen concentration can be improved as compared with the case where the current value Ipv which is output from the oxygen sensor and represents the oxygen concentration is not corrected. Moreover, although the provisional $O_2$ concentration computed using Expression (1) contains an error, the error of the $O_2$ concentration can be decreased by correcting the provisional $O_2$ concentration using a correction value based on the correction term which is a function of the provisional $O_2$ concentration and the pressure value P measured by the pressure sensor 20.

The error of the $O_2$ concentration computed by the ECU 30 can be decreased by using, as the correction term, a polynomial expression associated with the measured pressure value x, as shown by Expressions (9) and (10) or Expressions (9) and (11). For example, even when the dependence of the provisional $O_2$ concentration on the intake gas pressure changes continuously with the change in intake gas pressure, an increase in the error of the $O_2$ concentration can be restrained by using, as the correction term, a polynomial selected for said change.

Since each of the coefficients a, b and c (or the coefficients d and e) of the individual terms of the correction term is a function of the provisional $O_2$ concentration, the error of the $O_2$ concentration computed by the ECU 30 can be decreased further. For example, in the case where dependence of the provisional $O_2$ concentration on the pressure of the intake gas changes greatly with the intake gas pressure and the provisional $O_2$ concentration cannot be corrected satisfactorily through use of the correction term which is a fixed polynomial expression, reducing the error of the $O_2$ concentration is difficult. Even in such a case, by changing the coefficients a, b and c (or the coefficients d and e) of the individual terms of the polynomial expression in accordance with the provisional $O_2$ concentration, the range in which the provisional $O_2$ concentration can be corrected by the correction term can be broadened and the increase in the error of the $O_2$ concentration can be restrained more reliably.

In the above-described embodiment, Expression (1) is used to compute the provisional $O_2$ concentration. However, no particular limitation is imposed on the expression used to compute the provisional $O_2$ concentration. For example, the provisional $O_2$ concentration may be calculated by use of an expression obtained from the above-described Expression (1) through Taylor expansion of the exponent part "(-A·Ip (B+P)/P)" of Expression (1).

Meanwhile, in the above-described embodiment, the current value Ip of the oxygen sensor 10 is used as the output value thereof. However, no particular limitation is imposed on the output value; for example, a voltage value Vp of the oxygen sensor 10 may be used as the output value.

**Claims**

1. A gas sensor apparatus (1) comprising:

   a gas sensor (10) which outputs an output value corresponding to the concentration of a specific gas component contained in a gas flowing through a flow passage provided in an internal combustion engine (40);
   a pressure sensor (20) which measures the pressure of the gas; and
   a computation section (30) which computes a concentration value of the specific gas component on the basis of the output value output from the gas sensor and a pressure value of the gas measured by the pressure sensor (20), wherein the computation section (30) is configured
   to compute a provisional specific-component concentration using an expression which is derived from Fick's law and is a function of the output value output from the gas sensor (10) and the pressure value measured by the pressure sensor (20),
   to compute a correction value on the basis of a correction term which is a function of the provisional specific-component concentration and the pressure value measured by the pressure sensor (20), and
   to correct the provisional specific-component concentration using the correction value in order to compute the concentration value of the specific gas component.

2. The gas sensor apparatus (1) according to claim 1, wherein the computation section (30) is configured to compute the provisional specific-component concentration using the following expression:

$$\text{Provisional specific-component concentration} = 1 - e^{\left(-A \cdot I_P \cdot \frac{B+P}{P}\right)}$$

where Ip represents the output value output from the gas sensor (10), P represents the pressure value measured by the pressure sensor (20), and A and B are constants which allow approximation between two provisional specific-component concentrations which are computed from two pressure values and two output values corresponding to the two pressure values.

3. The gas sensor apparatus (1) according to claim 1 or 2, wherein the correction term is a polynomial expression associated with the pressure measured by the pressure sensor (20).

4. The gas sensor apparatus (1) according to claim 3, wherein different coefficients are contained in the individual terms of the polynomial expression, and each of these coefficients is a function of the provisional specific-component concentration.

5. A concentration measurement method using a gas sensor (10) disposed in a flow passage provided in an internal combustion engine (40) which outputs an output value corresponding to the concentration of a specific gas component contained in a gas flowing through the flow passage and a pressure sensor (20) disposed in the flow passage which measures the pressure of the gas, the method being adapted to compute a concentration value of the specific gas component on the basis of the output value output from the gas sensor (10) and a pressure value of the gas measured by the pressure sensor (20),
the method comprising:

computing a provisional specific-component concentration using an expression which is derived from Fick's law and which is a function of the output value output from the gas sensor (10) and the pressure value measured by the pressure sensor (20),
computing a correction value on the basis of a correction term which is a function of the provisional specific-component concentration and the pressure value measured by the pressure sensor (20), and
correcting the provisional specific-component concentration using the correction value in order to compute the concentration value of the specific gas component.

6. The concentration measurement method according to claim 5, wherein the method comprises computing the provisional specific-component concentration using the following expression:

$$\text{Provisional specific-component concentration} = 1 - e^{\left(-A \cdot I_P \cdot \frac{B+P}{P}\right)}$$

where Ip represents the output value output from the gas sensor (10), P represents the pressure value measured by the pressure sensor (20), and A and B are constants which allow approximation between two provisional specific-component concentrations which are computed from two pressure values and two output values corresponding to the two pressure values.

7. The concentration measurement method according to claim 5 or 6, wherein the correction term is a polynomial expression associated with the pressure measured by the pressure sensor (20).

8. The concentration measurement method according to claim 7, wherein different coefficients are contained in the individual terms of the polynomial expression, and each of these coefficients is a function of the provisional specific-component concentration.

# FIG. 1

# FIG. 2

```
        ┌─────────────────┐
        │      START      │
        └─────────────────┘
                 │
                 ▼
    ┌───────────────────────────┐
    │      OBTAIN Ip AND P       │────  S11
    └───────────────────────────┘
                 │
                 ▼
    ┌───────────────────────────┐
    │  COMPUTE PROVISIONAL $O_2$ │────  S12
    │       CONCENTRATION        │
    └───────────────────────────┘
                 │
                 ▼
    ┌───────────────────────────┐
    │ DETERMINE CALCULATION FORMULA │──  S13
    │  FOR COMPUTING COEFFICIENT C  │
    └───────────────────────────┘
                 │
                 ▼
    ┌───────────────────────────┐
    │     COMPUTE COEFFICIENT C  │────  S14
    └───────────────────────────┘
                 │
                 ▼
    ┌───────────────────────────┐
    │   COMPUTE CORRECTION VALUE │────  S15
    └───────────────────────────┘
                 │
                 ▼
    ┌───────────────────────────┐
    │  COMPUTE $O_2$ CONCENTRATION │──  S16
    └───────────────────────────┘
                 │
                 ▼
        ┌─────────────────┐
        │       END       │
        └─────────────────┘
```

FIG. 3A

a (-)

O₂ conc. (%)

FIG. 3B

b (-)

O₂ conc. (%)

FIG. 3C

c (-)

O₂ conc. (%)

FIG. 4A

d (–)

O$_2$ conc. (%)

FIG. 4B

e (–)

O$_2$ conc. (%)

FIG. 5

Europäisches
Patentamt

European
Patent Office

Office européen
des brevets

**EUROPEAN SEARCH REPORT**

Application Number

EP 12 17 9728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/223820 A1 (ISHIGURO YASUHIRO [JP] ET AL) 10 September 2009 (2009-09-10) <br> * paragraph [0013] * <br> * paragraph [0082] * <br> * paragraph [0086] - paragraph [0088] * <br> ----- | 1-8 | INV. <br> G01N27/407 <br> G01N27/416 <br> G01N33/00 |
| A | US 5 545 301 A (FRIESE KARL-HERMANN [DE] ET AL) 13 August 1996 (1996-08-13) <br> * column 2, line 40 - line 44 * <br> ----- | 1-8 | |
| A | US 5 249 453 A (USAMI JUN [JP] ET AL) 5 October 1993 (1993-10-05) <br> * column 8, line 35 - line 60 * <br> * column 6, line 56 - column 7, line 38 * <br> ----- | 1-8 | |
| | | | **TECHNICAL FIELDS SEARCHED (IPC)** <br><br> G01N |

The present search report has been drawn up for all claims

| Place of search | Date of completion of the search | Examiner |
|---|---|---|
| Munich | 6 December 2012 | Purdie, Douglas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

EP 2 557 418 A1

**ANNEX TO THE EUROPEAN SEARCH REPORT
ON EUROPEAN PATENT APPLICATION NO.**

EP 12 17 9728

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2012

| Patent document cited in search report | | Publication date | Patent family member(s) | | Publication date |
|---|---|---|---|---|---|
| US 2009223820 | A1 | 10-09-2009 | DE | 102009011861 A1 | 15-10-2009 |
| | | | JP | 4940172 B2 | 30-05-2012 |
| | | | JP | 2009210450 A | 17-09-2009 |
| | | | US | 2009223820 A1 | 10-09-2009 |
| US 5545301 | A | 13-08-1996 | DE | 4313251 A1 | 27-10-1994 |
| | | | EP | 0647319 A1 | 12-04-1995 |
| | | | JP | H07508353 A | 14-09-1995 |
| | | | US | 5545301 A | 13-08-1996 |
| | | | WO | 9425864 A1 | 10-11-1994 |
| US 5249453 | A | 05-10-1993 | DE | 69117269 D1 | 28-03-1996 |
| | | | DE | 69117269 T2 | 05-09-1996 |
| | | | EP | 0488791 A2 | 03-06-1992 |
| | | | JP | 2846735 B2 | 13-01-1999 |
| | | | JP | 4204246 A | 24-07-1992 |
| | | | US | 5249453 A | 05-10-1993 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6273381 A
- JP 2005061420 A